# EUROPEAN PATENT APPLICATION

(11) **EP 4 484 513 A1**
(43) Date of publication of application: **01.01.2025**
(21) Application number: 23306031.8
(22) Date of filing: 27.06.2023
(51) Int. Cl.: C09J 7/38, C09J 153/02

(54) **HOT MELT PRESSURE-SENSITIVE ADHESIVE**

(71) Applicant: Bostik SA, 92700 Colombes (FR)
(72) Inventor: BEYER, Marie, VENETTE (FR); RAFAITIN, Amandine, VENETTE (FR)
(74) Representative: Arkema Patent

(57) **Abstract**

The present invention relates to a hot melt pressure-sensitive adhesive composition comprising:
- a styrene block polymeric component;
- a mixture of tackifying resins, said mixture comprising:
∘ a) a rosin-based resin ;
∘ b) a rosin ester resin different from tackifying resin a);
∘ c) a terpene-based resin.

## Description

### TECHNICAL FIELD

The present invention relates to hot melt adhesive comprising a mixture of tackifying resins, and their uses.

### TECHNICAL BACKGROUND

Pressure-sensitive adhesives (PSAs) are substances which give the support layer which is coated therewith an immediate tack at ambient temperature (23°C). This immediate tack enables the instantaneous adhesion of said self-adhesive support to all types of substrates, under the effect of a gentle and brief pressure. PSAs are widely used for the manufacture of self-adhesive labels which are attached to articles (for example packaging) for the purpose of presenting information (such as barcode, name, price) and/or for decorative purposes. PSAs are also employed in the manufacture of self-adhesive tapes of varied uses. Mention may be made, for example, besides the transparent adhesive tape widely used in daily life, of the forming and the assembling of cardboard packagings; the protection of surfaces for painting operations, in the building industry; the maintenance of electric cables in the transportation industry: the adhesive bonding of fitted carpets by double-sided adhesive tapes.

PSAs are generally applied, by continuous coating processes carried out by industrial machines known as "coaters", over the whole of the surface of a large-sized support layer, where appropriate which is printable, in an amount (generally expressed in g/m²) denoted hereinbelow by the term "weight per unit area". The support layer generally consists of paper or of film of a polymeric material having one or more layers. The layer of self-adhesive composition which covers the support layer is itself covered with a protective nonstick layer (often known as a release liner), which often consists of a silicone film. The multilayer system obtained is generally packaged by winding in the form of large reels (or rolls) up to 2 m in width and 1 m in diameter, which can be stored and transported, such packaging often being referred to by the expression "roll stock".

This multilayer system can subsequently be converted into self-adhesive labels which can be applied by a label manufacturer referred to as a "converter", by means of conversion processes which include the printing of desired informative and/or decorative elements onto the printable face of the support layer, followed by cutting to the desired shape and sizes.

The protective nonstick layer can be easily removed without modifying the adhesive layer, which remains attached to the printable support layer. After separation from its nonstick protective layer, the label is applied in general at a temperature close to ambient temperature (23°C) to the article (for example the packaging) to be coated, either manually or with the aid of labelling machines on automated packaging lines.

This multilayer system can also be converted into self-adhesive tapes by cutting and packaging as rolls of predetermined width and length.

PSAs advantageously allow, due to their high ambient-temperature tack, rapid holding or attachment of the self-adhesive label and/or tape to the substrate (or article) to be coated (for example, as regards labels, on packagings, or else, as regards tapes, on packing boards to be formed), suitable for obtaining high industrial production rates.

Hot-melt adhesives or hot melts (HMs) are substances that are solid at ambient temperature and contain neither water nor solvent. They are applied in the melt state and solidify on cooling, thus forming a joint which, due to its adhesive strength, attaches the substrates to be assembled. Certain hot melts are formulated in such a way as to give the support coated therewith a relatively hard and tack-free character. Other hot melts provide the support with a relatively soft character and a high tack; these are PSAs which are widely used for the manufacture of self-adhesive articles (for example self-adhesive labels). The corresponding adhesives are denoted by the designation "hot-melt pressure-sensitive adhesives" (or HMPSA). HMPSA are thus a different category than hot melt. HM. They therefore also make it possible, owing to their adhesive strength, to firmly attach the label or the tape to the desired substrate, whether it is for example packaging to be labeled or board to be assembled.

Refrigerated and cold food labels may be primarily intended to communicate important product messaging, nutrition information and branding information, but they also help products sell. Indeed, most of the consumers will try a new product if a packaging catches their eyes. Impressions take about seven seconds, making subsequent judgments based on quick information. Thus, a label falling off from a packaging will negatively impact the consumers. In beverage labeling, bottles often move from place to place, like a cold refrigerator to a warm car, creating condensation and affecting label performance. In refrigerated labeling, if outdoor temperatures are hot and humid, labels may fall off when transported from store to home.

Refrigerated food manufacturers need product packaging labels that are visually appealing, showcase superior product packaging, adhere quickly and easily, conform to a variety of packaging types and stay in place as intended for the product's life cycle.

Conventional hot melt pressure-sensitive adhesives are petrochemical-based, and rely on energy-intensive processes. In addition, a large percentage of the petroleum is transported from various parts of the world, which increases the carbon footprint. Generally, zero to very few raw materials in hot melt pressure-sensitive adhesives are made from renewable resources and thus contribution is not enough on the impact of the environment.

There is an increased desire to reduce carbon footprint and to produce environmentally sound products. One method of making an environmentally sound adhesive is to decrease carbon footprint by forming a hot melt pressure-sensitive adhesive from materials having a high renewable resource content.

However, hot melt pressure-sensitive adhesives made from renewable materials do not necessarily allow to reach similar or better properties (adhesiveness, cohesion) than conventional petroleum-based adhesives.

There is thus a need for providing environment-friendly hot melt pressure-sensitive adhesives that allows to resolve at least a part of the above-mentioned drawbacks.

More particularly, there is thus a need for environment-friendly hot melt pressure sensitive adhesive having good adhesive properties on a wide range of temperature, in particular from -10°C to room temperature (23°C).

There is also a need for environment-friendly hot melt pressure sensitive adhesive having good compromise between adhesive properties and cohesion on a wide range of temperature, in particular from -10°C to room temperature (23°C).

There is a need for environment-friendly hot melt pressure-sensitive adhesive exhibiting a good peel on a wide range of temperature, even at temperature below room temperature (23°C), with a high tack and a good shear.

### DESCRIPTION OF THE INVENTION

The invention will now be described in more details without limitation in the following description.

Unless otherwise mentioned, the percentages in the present application are percentages by weight.

The present invention concerns a hot melt pressure-sensitive adhesive composition comprising:
- a styrene block polymeric component;
- a mixture of tackifying resins, said mixture comprising:
   ∘ a) a rosin-based resin ;
   ∘ b) a rosin ester resin different from tackifying resin a);
   ∘ c) a terpene-based resin.

Preferably, the hot melt pressure-sensitive adhesive composition has a glass transition temperature lower than 5°C, more preferably lower than 2°C.

The glass transition temperature is measured by dynamic mechanical analysis (DMA).

For example, the Tg may be measured as follows using ARES by Rheometric Scientific: the hot melt pressure-sensitive adhesive composition is placed between two parallel plates. The lower plate connected to the drive applied the strain, the upper plate is static. The geometry radius R is 10 mm. The gap between both plates has a height H of 1,600 µm. The pulsed air oven controls the temperature of the material (+/- 0.5°C).

Test execution:
- After GAP 0 at 130°C,
- placing the adhesive (1 cm³) on the lower plate;
- lowering the upper plate to a gap of 1,800 µm till its contacts the adhesive;
- removing excessive material;
- lowering the upper plate to a gap of 1,600 mm;
- setting the temperature to the start temperature of 130°C, the measurement strain to 20%, the constant oscillation frequency is 10 rad/s and the cooling rate is 5°C/min (from 130°C to 70°C);
- Between 70°C and 20°C, the measurement strain is 10%, the constant oscillation frequency is 10 rad/s and the cooling rate is 5°C/min
- Between 20°C and -20°C, the measurement strain is 1%; the constant oscillation frequency is 10 rad/s and the cooling rate is 5°C/min
- Between -20°C and -40°C, the measurement strain is 0,1%; the constant oscillation frequency is 10 rad/s and the cooling rate is 5°C/min
- after completing the test, melting the adhesive, lifting the upper plate and removing the adhesive from the lower and upper plate; and
- setting the temperature back to room temperature.

The glass transition temperature is then measured by measuring the crossover temperature between storage modulus and loss modulus for temperature higher than 50 °C ; or Tg is measured by measuring the temperature at the maximum of damping factor for temperature lower than 50 °C.

The hot melt pressure-sensitive adhesive composition comprises at least three different tackifying resins (resins a), b) and c)).

### Hot melt pressure-sensitive adhesive composition

### Styrene block polymeric component

The hot melt adhesive composition of the invention comprises a styrene block polymeric component. By "*styrene block polymeric component*" is meant a component consisting of at least one SBC (styrene block copolymer) *i.e.* a copolymer comprising at least one styrene block, including styrene triblock copolymers and styrene diblock copolymers.

The styrene block copolymer has at least one A block that includes styrene and at least one B block that includes, e.g., elastomeric conjugated dienes (e.g., hydrogenated and unhydrogenated conjugated dienes), sesquiterpenes (e.g., hydrogenated and nonhydrogenated sesquiterpenes), and combinations thereof. The A blocks and the B blocks bind to one another in any manner of binding such that the resulting copolymer exhibits a variety of structures including, e.g., random, straight-chained, branched, radial, star, comb, tapered, and combinations thereof. The block copolymer can exhibit any form including, e.g., linear A-B block, linear A-B-A block, linear A-(B-A)n-B multi-block, and radial (A-B)n-Y block where Y is a multivalent compound and n is an integer of at least 3, tetrablock copolymer, e.g., A-B-A-B, and pentablock copolymers having a structure of A-B-A-B-A.

Suitable styrene A blocks include, e.g., styrene, alpha-methylstyrene, o-methylstyrene, m-methylstyrene, p-methylstyrene, p-tert-butylstyrene, 2,4-dimethylstyrene, 2,4,6-trimethylstyrene, and combinations thereof.

Suitable block elastomeric conjugated diene B blocks include, e.g., butadiene (e.g., polybutadiene), isoprene (e.g., polyisoprene), 2,3-dimethyl-1,3-butadiene, 1,3-pentadiene, 1,3-hexadiene, and combinations thereof, and hydrogenated versions thereof including, e.g., ethylene, propylene, butylene and combinations thereof.

Suitable B block sesquiterpenes include, e.g., beta farnesene.

The styrene block polymeric component can comprise one or a mixture of styrene block copolymers.

When more than one styrene block copolymer is included the styrene content, the diblock content and the melt flow rate ranges specified for the styrene block polymeric component are a weight average of all the grades present. As an example, if the styrene block polymeric component comprises two styrene block copolymers X and Y. Polymer X is present at 25 weight % (wX) with a styrene content of 15% (sX) and polymer Y is present at 25 weight % (wY) with a styrene content of 20 weight % (sY). The average styrene content of the styrene block polymeric component is calculated in the following way: wX/(wX+wY)* sX + wY/( wX+wY)* sY = 0.5 (15) + 0.5 (20) = 17.5 weight %.

The styrene block polymeric component has preferably an average styrene content of from 5% by weight to 55% by weight, more preferably from 10% by weight to 45% by weight, and even more preferably from 15% to 45%.

The styrene block polymeric component preferably comprises from 0% by weight to 90%, more preferably from 15% by weight to 80% by weight of diblock.

By "*diblock content*" is meant the weight proportion of diblock copolymers in the styrene block polymeric component.

The styrene block copolymer may be selected from the group consisting of SB, SI, SEB, SEP, SBBS, SBS, SEBS, SEPS, SEEPS, SIBS, SIS, random-block SBR, random-block SIR and mixtures thereof.

More preferably, the styrene block polymeric component comprises at least one SIS copolymer.

By "*SBBS*" is meant a styrene-butadiene-butylene-styrene triblock copolymer. By "*SBS*" is meant a styrene-butadiene-styrene triblock copolymer. By "*SEBS*" is meant a styrene-ethylene-butylene-styrene triblock copolymer. By "*SEPS*" is meant a styrene-ethylene-propylene-styrene triblock copolymer. By "*SEEPS*" is meant a styrene-ethylene-ethylene-propylene-styrene triblock copolymer. By "*SIBS*" is meant a styrene-isoprene-butadiene-styrene triblock copolymer. By "SIS" is meant a styrene-isoprene-styrene triblock copolymer. By "*random-block SBR*" is meant random-block styrene butadiene copolymers (part of the styrene being present as polystyrene blocks). By "*random-block SIR*" is meant random-block isoprene butadiene copolymers (part of the styrene being present as polystyrene blocks). By *"SB"* is meant a styrene-butadiene diblock copolymer. By "*SI*" is meant a styrene-isoprene diblock copolymer. By "*SEB*" is meant a styrene-ethylene-butylene diblock copolymer. By "*SEP*" is meant a styrene-ethylene-propylene diblock copolymer.

More preferably, the styrene block polymeric component comprises :
- at least one linear triblock SIS copolymer;
- at least one diblock SI copolymer;
- optionally at least one linear triblock SBS copolymer; and
- optionally at least one diblock SB copolymer.

Useful commercial styrene block copolymers include KRATON D and G ^{®} series from Kraton Polymers, EUROPRENE Sol T ^{®} series from Versalis (Eni group), SOLPRENE ^{®} series from Dynasol Elastomers, SI NOPEC ^{®} series from SINOPEC and Taipol ^{®} and Vector^{®} series from TSRC Corporation. Other useful examples include:
- Sinopec^{®} YH-1126, a linear SIS triblock copolymer with a styrene content of 16 %, and a diblock content of 50 %;
- Sinopec^{®} YH-1209, a linear SIS triblock copolymer with a styrene content of 30 %, and a diblock content of less than 1 %;
- Kraton^{®} D1152, a mixture of linear SBS triblock and SB diblock copolymers, with a styrene content of 29.5 % by weight relative to the total weight of the mixture, an average molecular weight of around 122 000 g/mol, a melt flow index or MFI (measured according to ISO1133) of 8.5 grams/ 10 minutes at 200°C under a load of 5 kilograms, and a SB diblock content of around 17 % by weight relative to the total weight of the mixture.
- Kraton^{®} D1161, a mixture of linear SIS triblock and SI diblock copolymers, with a styrene content of 15 % by weight relative to the total weight of the mixture, an MFI (measured according to ISO1133) of 9 g/10 min at 200°C under a load of 5 kg, an average molecular weight of around 220 000 g/mol, and a SI diblock content of around 19 % by weight relative to the total weight of the mixture.
- Taipol^{®} SBS 4202 from TSRC Corporation, a linear SBS triblock copolymer with a styrene content of 40 % by weight relative to the total weight of the triblock copolymer, an MFI (measured according to ASTM D1238) of 3 to 10 g/10 min at 190°C under a load of 5 kg, an average molecular weight of around 102 400 g/mol.
- Vector^{®} 4411 from TSRC Corporation, a linear SIS triblock copolymer with a styrene content of 44 % by weight relative to the total weight of the triblock copolymer, an MFI (measured according to ASTM D1238) of 40 g/10 min at 200°C under a load of 5 kg, an average molecular weight of around 106 000 g/mol.
- Europrene^{®} SOL TE9326 (linear SIS triblock copolymer, styrene block content of about 30 %, diblock content of about 15 % from Versalis.

Preferably, the hot melt pressure-sensitive adhesive composition is substantially free of radial styrene block copolymers.

The hot melt pressure-sensitive adhesive composition preferably comprises from 5 % to 40 % by weight of styrene block polymeric component, based on the total weight of the hot melt pressure-sensitive adhesive composition. More preferably, the hot melt pressure-sensitive adhesive composition comprises from 10% to 35 % by weight, even more preferably from 15 % to 35 % by weight, of styrene block polymeric component, based on the total weight of the hot melt pressure-sensitive adhesive composition.

### Mixture of tackifying resins

The hot melt pressure-sensitive adhesive composition comprises a mixture of tackifying resins, said mixture comprising:
∘ a) a rosin-based resin ;
∘ b) a rosin ester resin different from tackifying resin a);
∘ c) a terpene-based resin.

### Rosin-based resin a)

The rosin-based resin (or rosin-based tackifier) a) is preferably selected from natural rosin and modified rosins.

The natural and modified rosins preferably include gum rosins, wood rosins, tall-oil rosins, distilled rosins, rosin esters, dimerized rosins and polymerized rosins, rosin-modified phenolic resins, their hydrogenated versions thereof.

As examples of commercially available tackifier resins a) mention may be made of: the partially hydrogenated rosin from Eastman sold under the trade name Foralyn^{®} E; the fully hydrogenated rosin from Eastman sold under the trade name Foral^{®} AX-E; the hydrogenated rosin from DRT sold under the trade name Foral^{®}DX.

Preferably, the rosin-based resin a) is at least partially hydrogenated, more preferably it is fully hydrogenated.

Preferably, the rosin-based resin a) is not a rosin ester.

Preferably, the rosin-based resin a) is hydrogenated gum rosin.

The tackifying resin a) has preferably a Ring and Ball softening point (as measured according to ASTM E28) lower than or equal to 100°C, more preferably lower than or equal to 90°C.

### Rosin ester b)

The rosin ester b) typically include non-hydrogenated rosin ester, and its hydrogenated versions (such as partially and fully hydrogenated versions).

The rosin ester b) is preferably selected from glycol, glycerol and pentaerythritol esters of natural and modified rosins, their hydrogenated versions, and mixtures thereof.

The natural and modified rosins may comprise gum rosin, wood rosin, tall oil rosin, distilled rosin, hydrogenated rosin, dimerized rosin and polymerized rosin.

The rosin ester b) is preferably selected from the group consisting of glycerol esters of pale wood rosin, glycerol esters of hydrogenated rosin, glycerol esters of polymerized rosin, pentaerythritol esters of pale wood rosin, pentaerythritol esters of hydrogenated rosin, pentaerythritol esters of tall oil rosin and phenolic modified pentaerythritol esters of rosin, their hydrogenated versions, and mixtures thereof.

As examples of commercially available tackifier resins b) mention may be made of: Sylvalite^{®} RE 100L commercialized by KRATON which is a pentaerythritol based tall-oil rosin ester, Sylvalite^{®} RE 85L commercialized by KRATON which is a glycerol ester of tall oil rosin, Sylvalite^{™} RE 100S commercialized by Kraton which is pentaerythritol rosin ester of tall oil rosin.

Preferably, the rosin ester b) has a Ring and Ball softening point lower than 110°C, more preferably comprised from 80° to 110°C. The softening point may be measured by using the ASTM E28 standard.

Preferably, the rosin ester b) is selected from pentaerythritol rosin ester of tall oil rosin.

### Terpene-based resin c)

The terpene-based resin (or terpe-based tackifier) c) preferably include polyterpene homopolymers, copolymers of terpene with a diene monomer (for example styrene, α-methylstyrene, etc), phenolic-modified terpene resins, their hydrogenated versions, and mixtures thereof.

The term "copolymers" typically include terpolymers.

The "hydrogenated versions" typically include the partially or fully hydrogenated versions. For example, terpene derivatives c) include the non-hydrogenated polyterpene homopolymers, the partially polyterpene homopolymers and the fully-hydrogenated polyterpene homopolymers.

As examples of commercially available tackifier resins c) mention may be made of: the polyterpene from DRT sold under the trade name DERCOLYTEOM105, resulting from the polymerization of α-pinene and β-pinene and having a Ring and Ball softening point of 105°C; the terpene phenol resins from the Arizona Chemical Company sold under the trade names Sylvares^{®} TP (96, 2040, 300, 7042, 2019).

Preferably, the terpene-based resin c) is selected from polyterperne homopolymers, their hydrogenated versions, and mixtures thereof.

All the tackifying resins a), b) and c) may be modified with carboxylic acid or anhydride (for example maleic anhydride). Preferably, none of the tackifying resins a), b) and c) is modified by carboxylic acid or anhydride.

Preferably, the hot melt pressure-sensitive adhesive composition comprises from 10% to 70% by weight of the mixture of tackifying resins a), b) and c), even more preferably from 20% to 60% by weight of the mixture of tackifying resins a), b) and c) based on the total weight of said hot melt adhesive. These weight ranges are thus directed to the total content of the mixture of tackifiers within the hot melt pressure-sensitive adhesive composition and not to each tackifier within the hot melt.

Preferably, the hot melt pressure-sensitive adhesive composition comprises:
- from 5% to 50% by weight of rosin-based resin a);
- from 5% to 50% by weight of rosin ester resin b);
- from 5% to 50% by weight of terpene-based resin c),
based on the total weight of the hot melt pressure-sensitive adhesive composition.

More preferably, the hot melt pressure-sensitive adhesive composition comprises:
- from 8% to 30% by weight of rosin-based resin a);
- from 10% to 40% by weight of rosin ester resin b);
- from 8% to 30% by weight of terpene-based resin c),
based on the total weight of the hot melt pressure-sensitive adhesive composition.

### Plasticizer

The hot melt pressure-sensitive adhesive composition preferably comprises a biobased plasticizer.

By "*biobased plasticizer*" is meant a plasticizer that derives at least partially from a biomaterial.

The biobased plasticizer has preferably a biocarbon content equal to or higher than 85 %, preferably equal to or higher than 90 %, and more preferably equal to or higher than 93 %.

The term "*bio-carbon*" indicates that the carbon is of renewable origin, or of natural origin and originates from a biomaterial, as indicated below. The biocarbon content and the biomaterial content are expressions denoting the same value.

A material of renewable origin, also called biomaterial, is an organic material in which the carbon derives from CO₂ recently fixed (on a human scale) by photosynthesis from the atmosphere. On earth, this CO₂ is captured or fixed by plants. At sea, CO₂ is captured or fixed by bacteria or plankton carrying out photosynthesis. A biomaterial (100% carbon of natural origin) has a ¹⁴C/¹²C isotope ratio greater than 10⁻¹², typically of approximately 1.2 × 10⁻¹², while a fossil material has a zero ratio. Indeed, the isotope ¹⁴C is formed in the atmosphere and is then integrated by photosynthesis, according to a time scale of a few decades at most. The half-life of ¹⁴C is 5730 years. Thus, materials resulting from photosynthesis, namely plants in general, necessarily have a maximum ¹⁴C isotope content.

The biomaterial content or biocarbon content is determined by using the standards ASTM D 6866 (ASTM D 6866-06) and ASTM D 7026 (ASTM D 7026-04). The ASTM D 6866 standard is "*Determining the Biobased Content of Natural Range Materials Using Radiocarbon and Isotope Ratio Mass Spectrometry Analysis*"*,* while the ASTM D 7026 standard is "*Sampling and Reporting of Results for Determination of Biobased Content of Materials via Carbon Isotope Analysis*"*.* The second standard makes reference in its first paragraph to the first standard.

The first standard describes a test for measuring the ¹⁴C/¹²C ratio of a sample and compares it with the ¹⁴C/¹²C ratio of a reference sample of 100 % renewable origin, to give a relative percentage of C of renewable origin in sample. The standard is based on the same concepts as ¹⁴C dating, but without applying the dating equations.

The ratio thus calculated is referred to as the "*pMC*" (percent Modern Carbon). If the material to be analyzed is a mixture of biomaterial and fossil material (without radioactive isotope), then the pMC value obtained is directly correlated with the quantity of biomaterial present in the sample. The reference value used for the ¹⁴C dating is a value dating from the 1950s. This year was chosen because of the existence of nuclear tests in the atmosphere which introduced large quantities of isotopes into the atmosphere after this date. The 1950 reference corresponds to a pMC value of 100. Taking into account the thermonuclear tests, the current value to be retained is approximately 107.5 (which corresponds to a correction factor of 0.93). The radioactive carbon signature of a current plant is therefore 107.5. A signature of 54 pMC and 99 pMC therefore correspond to an amount of biocarbon in the sample of 50 % and 93 %, respectively.

The biobased plasticizer may be selected from the group consisting of animal fat, vegetable oil, their derivatives thereof, lactic acid derivatives, modified versions thereof, fatty acid derivatives, , diene homopolymers, and mixtures thereof.

Preferably, the biobased plasticizer is selected from vegetable oil and their derivatives thereof, and fatty acid derivatives.

The diene homopolymers are preferably liquid at 23°C and selected from polybutadiene, polyfarnesene, and mixtures thereof.

The term "their derivatives thereof' corresponds to "animal fat derivatives" and "vegetable oil derivatives".

The animal fat derivatives typically include the fatty acid derived from animal fat, and functionalized animal fat.

The vegetable oil derivatives typically include functionalized vegetable oil.

The vegetable oil derivatives typically include the fatty acids derived from vegetable oil such as for example castor oil, sunflower oil, coconut oil, corn oil, canola oil, olive oil, palm oil, cottonseed oil, rapeseed oil, safflower oil, soybean oil, sesame oil, almond oil, avocado oil, hemp oil, and linseed oil. A vegetable oil is a composition comprising triple esters of fatty acids and of glycerol (also called *"triglycerides").*

The expression *"fatty acids derived from vegetable oil"* is thus intended to designate the fatty acids present in the molecular structure of these triglycerides. Said fatty acids can be obtained, in the form of isolated compounds, by saponification, hydrolysis or methanolysis of said triglycerides.

Herein, the fatty acid refers to an aliphatic carboxylic acid having at least one carboxy group, and may have one or several hydroxy groups. Fatty acids are broadly divided into saturated fatty acids and unsaturated fatty acids. The saturated fatty acid is an acid having no double bond and no triple bond in a carbon chain. The unsaturated fatty acid is an acid having one or several double bond or triple bond in a carbon chain.

The fatty acid may be selected from the group consisting of: butyric acid, caproic acid, caprylic acid, capric acid, lauric acid, myristic acid, palmitic acid, stearic acid, oleic acid, linoleic acid, erucic acid, ricinoleic acid, 2-Hydroxybutanoic acid, 3-Hydroxybutanoic acid, 4-Hydroxybutyric acid, 2-Hydroxytetradecanoic acid, 3-Hydroxytetradecanoic acid, 2-Hydroxyhexadecanoic acid, 3-Hydroxyhexadecanoic acid, 3-Hydroxyoctadecanoic acid, 12-Hydroxyoctadecanoic acid, 17-Hydroxyoctadecanoic acid, and mixtures thereof.

The vegetable oil derivatives also typically include fatty acid derivatives.

As used herein, the derivatives of the fatty acids (fatty acid derivatives) are fatty acid based components, which comprises at least one fatty acid radical within their backbone. Examples of fatty acid derivatives typically include compounds obtained by one or several chemical reactions involving fatty acids.

Fatty acid derivatives include both unsaturated and saturated fatty acid derivatives.

The fatty acid derivative may be selected from the group consisting of: fatty acid amides, fatty acid esters, dimers or trimers of fatty acid, fatty alcohols, fatty aldehydes, fatty ketones, their hydrogenated derivatives, and mixtures thereof.

The hydrogenated derivatives may include both partially or completely hydrogenated derivatives.

The fatty acid amide may be any suitable amide compound derived from the reaction between a fatty acid and ammonia or an amine-containing compound (e.g., a compound containing a primary amine group or a secondary amine group).

Fatty acid esters can comprise one or several ester functions.

Fatty acid esters typically include:
- fatty acid esters resulting from chemical reaction between polyol and/or monol with one or several fatty acids (or triglycerides), the chemical reaction being selected from esterification, transesterification. The triglycerides preferably come from vegetable oil or animal fat.

The mono-alcohol may be selected from methanol, ethanol, propanol, isopropanol, butanol, 2-ethylhexanol, phenol, fatty alcohol, and mixtures thereof. The polyol may be selected from glycerol, pentaerythritol, erythritol, sorbitol, ethylene glycol, propylene glycol, butylene glycol, 1,3-propanediol, 1,4-butanediol, 1,6-hexanediol, 1,4-cyclohexanediol, trimethylolpropane, pentaerythritol, diethylene glycol, triethylene glycol, tetraethylene glycol, pentaethylene glycol, hexaethylene glycol, and mixtures thereof. The fatty alcohol are typically derived from fats and oils, originating in plants, but also synthesized in animals and algae. The fatty alcohol may include oleyl alcohol, lauryl alcohol, stearyl alcohol, myristyl alcohol, palmitoleyl alcohol, nonadecyl alcohol, arachidyl alcohol, erucyl alcohol, etc.

An example of fatty acid derivative (for example fatty acid ester) may be the commercially available PIONIER^{®} TP130S from H&R which is oleyl oleate (acid number 0.21 mg KOH/g, viscosity of 900 mPas at 25°C).

Preferred examples are fatty acid alkyl esters. Fatty acid alkyl esters more preferably include fatty acid methyl esters, fatty acid ethyl esters, fatty acid isopropyl esters, fatty acid isobutyl esters, fatty acid isoamyl esters, fatty acid 2-ethylhexyl esters.

An example of a fatty acid derivative (fatty acid ester in particular) resulting from the transesterification reaction between a mono-alcohol and the triglyceride may be the commercially available RADIA 7916 (methyl stearate, acid number 0.4 mg KOH/g) or RADIA 7195 (isopropyl stearate, acid number 0.1 mg KOH/g) commercialized by OLEON, RADIA 7231 (isopropyl oleate) commercialized by OLEON.
- fatty acid esters resulting from functionalization (derivatization) of another fatty acid ester (such as for example epoxidation of a first fatty acid ester to provide a second fatty acid ester with epoxy moiety; alkoxylation ; acylation ; etc..).- monoglyceride, diglyceride, triglycerides, and mixtures thereof;
- fatty acid polyesters; and
- mixtures thereof.

Fatty acid polyesters are polymers/oligomers that contain ester function in repeat unit of their main chain.

Fatty acid polyesters typically include fatty acid oligoesters and fatty acid copolyesters.

Fatty acid polyesters preferably include homopolymers of fatty acids and copolymers of fatty acids (copolymerization of different fatty acid), and mixtures thereof.

The homopolymers of fatty acids may result from the polycondensation of a fatty acid comprising hydroxyl group, or a mixture of fatty acids comprising at least one fatty acid with hydroxyl group.

Suitable fatty acid oligoesters and polyesters are commercially available from Vandeputte such as oligoesters of ricinoleic acid having acid number = 7 or 14 mg KOH/g, VEOPUR 759035 (oligoester of castor oil - side OH groups of castor oil being transesterified with ester functions of the castor oil itself thus eliminating glycerol), oligoester based on castor oil/ricinoleic acid having an acid number = 4.72 mg KOH/g, Mn = 2453 g/mol, and Mw = 4000 g/mol).

Preferably, the fatty acid derivative is selected from fatty acid polyesters.

Preferably, the biobased plasticizer has a weight average molecular weight higher than or equal to 2 500 g/mol, more preferably higher than or equal to 3 000 g/mol, and even more preferably ranges from 3 000 g/mol to 12 000 g/mol. Even more preferably, the bioplasticizer has a weight average molecular weight ranging from 3 000 g/mol to 6 000 g/mol.

The weight average molecular weights are determined by gel permeation chromatography, using standards such as polystyrene. More particularly, it is determined with a Waters alliance instrument, using THF as eluent, with a flow rate of 1ml/min at 35°C, calibrated with polystyrene.

Preferably, the bioplasticizer has an acid number ranging from 1 to 20, more preferably from 3 to 20 mg KOH/g. The acid number may be measured according to DIN EN ISO 2114:2000 (AC:2005).

The hot melt pressure-sensitive adhesive composition preferably comprises from about 0 to about 40 %, more preferably from 10 to about 30 % by weight of a biobased plasticizer (or a mixture of biobased plasticizers), based on the total weight of the hot melt pressure-sensitive adhesive composition.

### Stabilizer

The hot melt pressure-sensitive adhesive composition also preferably comprises at least one stabilizer, more preferably at least one antioxidant.

The hot melt pressure-sensitive adhesive composition comprises from about 0 to about 5 %, preferably from 0 to about 3 %, more preferably from about 0.1 to about 3 %, more preferably from about 0.1 to 2 %, by weight of a stabilizer, based on the total weight of the hot melt pressure-sensitive adhesive composition.

Suitable stabilizers are incorporated to help protect the polymers noted above, and thereby the total adhesive system, from the effects of thermal and oxidative degradation which normally occurs during the manufacture and application of the adhesive composition, as well as in the ordinary exposure of the final product to the ambient environment. Such degradation is usually manifested by deterioration in the appearance, physical properties and performance characteristics of the hot melt adhesive composition.

Among the applicable stabilizers, more particularly antioxidants, mention can be made of high molecular weight hindered phenols and multifunction phenols, such as sulfur and phosphorous-containing phenols. Hindered phenols are well known to those skilled in the art and may be characterized as phenolic compounds that also contain sterically bulky radicals in close proximity to the phenolic hydroxyl group thereof. In particular, tertiary butyl groups generally are substituted onto the benzene ring in at least one of the ortho positions relative to the phenolic hydroxyl group. The presence of these sterically bulky substituted radicals in the vicinity of the hydroxyl group serves to retard its stretching frequency and correspondingly, its reactivity; this steric hindrance thus providing the phenolic compound with its stabilizing properties. Representative hindered phenols include: 1,3,5-trimethyl-2,4,6-tris(3-5-di-tert-butyl-4-hydroxybenzyl) benzene; pentaerythritol tetrakis-3(3,5-di-tert-butyl-4-hydroxyphenyl) propionate; n-octadecyl-3(3,5-di-tert-butyl-4-hydroxyphenyl) propionate, 4.4'-methylenebis(4-methyl-6-tert-butylphenol); 2,6-di-tert-butylphenol; 6-(4-hydroxyphenoxy)-2,4-bis(n-octylthio)-1,3,5-triazine; 2,3,6-tris(4-hydroxy-3,5-di-tert-butyl-phenoxy)-1,3,5-triazine; di-n-octadecyl-3,5-di-tert-butyl-4-hydroxybenzylphosphonate; 2-(n-octyl-thio)ethyl-3,5-di-tert-butyl-4-hydroxybenzoate and sorbitol hexa-3(3,5-di-tert-butyl-4-hydroxy-phenyl)propionate.

The performance of these antioxidants may be further enhanced by utilizing, in conjunction therewith: (1) synergists such as, for example, thiodipropionate esters and phosphites; examples of these include dialuryl thiodipropionate (DLTDP) and tris(nonylphenyl)phosphite (TNPP), respectively; and (2) chelating agents and metal deactivators as, for example, ethylenediaminetetraacitic acid, salts thereof and disalicylalpropylenediimine.

Suitable antioxidants include those commercially available under the tradenames Irganox^{®} 1010 (tetrakis(methylene(3,5-di-ter-butyl-4-hydroxyhydrocinnamate)) methane), lrgafos^{®} 168 (tris(2,4-ditert-butylphenyl)phosphate) and Irganox^{®} PS800 (propanoic acid, 3,3'-thiobis-1,1'-didodecyl ester) from BASF, Chinox^{®} 1010 (pentaerythritol tetrakis(3-(3,5-di-tert-butyl-4-hydroxyphenyl) propionate)) from Shuangjian, Evernox^{®} 1010 and Everfos^{®} 168 from Everspring Chemical, Songnox^{®} 10 and 1680 from Songwon.

### Other additives

The hot melt pressure-sensitive adhesive composition may further comprise at least one other additive, preferably in an amount of from 0 to 5 % by weight, by total weight of the hot melt pressure-sensitive adhesive composition.

The additives may be selected from the group consisting of inert colorants (*e.g*. titanium dioxide), fillers (*e.g*. talc, calcium carbonate, clay, silica, mica, wollastonite, feldspar, aluminum silicate, alumina, hydrated alumina, glass microspheres, ceramic microspheres, thermoplastic microspheres and mixtures thereof), surfactants, additional polymers other than styrene block copolymers, crosslinking agents, nucleating agents, reactive compounds, fire-retardant mineral or organic agents, ultraviolet (UV) or/and infrared (IR) light absorbing agents, UV or/and IR fluorescing agents, wax, and mixtures thereof. These optional other additives are well known in this art.

The additional polymers may be chosen from the group consisting of polyolefins, amorphous poly-alpha-olefins, ethylene-vinyl acetate polymers (EVA), polyamides, and mixtures thereof. The hot melt adhesive may comprise from about 0 to about 5 % by weight of at least one additional polymer, by total weight of the composition. However, preferably, the holt melt composition does not comprise an additional polymer.

The wax may be selected from the group consisting of biobased waxes, microcrystalline waxes, paraffin waxes, polyethylene waxes, polypropylene waxes, by-product polyethylene waxes, and Fischer-Tropsch waxes. Preferably, the holt melt pressure-sensitive adhesive composition does not comprise a wax.

Biobased waxes may be Carnauba wax, Candelilla wax, rice wax, bee wax.

Preferably, the hot melt pressure-sensitive adhesive composition does not comprise mineral oil, such as naphtenic oil or paraffinic oil.

### Hot melt pressure-sensitive adhesive composition

Preferably, the hot melt pressure-sensitive adhesive composition has a total styrene content higher ranging from 5% to 20%, more preferably ranging from 5% to 15%, and even more preferably ranging from 6% to 11%.

The total styrene content of the hot melt pressure-sensitive adhesive is defined as the sum of styrenic content of each styrene block copolymer of the styrenic block polymeric component (in case the styrenic block polymeric component comprises more than one styrene block copolymer) multiplied by its quantity by weight in the total formula. For example, if polymer X is present at 25 weight % of the hot melt pressure-sensitive adhesive (wX) with a styrene content of 15% (sX) and polymer Y is present at 25 weight % (wY) of the hot melt pressure-sensitive adhesive with a styrene content of 20 weight % (sY). The total styrene content of the hot melt pressure-sensitive adhesive is calculated in the following way: wX*sX+wY* sY = 0,25*15 + 0,25*20 = 8,75 weight %.

In case, the styrenic block polymeric component comprises only one styrene block copolymer, the total styrene content of the hot melt pressure-sensitive adhesive is calculated by multiplying by its quantity by weight in the hot melt pressure-sensitive adhesive. For example, if polymer X is present at 25 weight % of the hot melt pressure-sensitive adhesive (wX) with a styrene content of 15% (sX), the total styrene content of the hot melt pressure-sensitive adhesive is calculated in the following way: wX*sX = 0,25*15 = 3,75 weight %.

Preferably, the hot melt pressure-sensitive adhesive composition has a total diblock content higher ranging from 5% to 30%, more preferably ranging from 5% to 20%, and even more preferably ranging from 10% to 20%.

The same explanations for the calculation of total styrene content of the hot melt pressure-sensitive adhesive apply similarly for the calculation of the total diblock content of said hot melt pressure-sensitive adhesive.

Preferably, the hot melt pressure-sensitive adhesive composition does not comprise petroleum tackifier.

Preferably the hot melt pressure-sensitive adhesive composition comprises:
- from 5% to 40% by weight of styrene block polymeric component, said styrene block polymeric component comprising at least one SIS;
- from 5% to 50% by weight of rosin-based resin a);
- from 5% to 50% by weight of rosin ester resin b);
- from 5% to 50% by weight of terpene-based resin c); and
- from 10% to 30% by weight of a biobased plasticizer, preferably selected from vegetable oil, their derivatives thereof, and fatty acid derivatives.

The hot melt pressure-sensitive adhesive composition preferably has a Brookfield viscosity at 163°C lower than or equal to 20 000 mPa.s, even more preferably lower than or equal to 10 000 mPa.s. The Brookfield viscosity may be measured according to the standard method ASTM D-3236, using a Brookfield viscometer of the type Spindle 27, at a temperature of about 163°C

The biocarbon content of the hot melt pressure-sensitive adhesive composition is preferably greater than or equal to 60 %, more preferably greater than or equal to 65 %, and even more preferably greater than or equal to 70 %.

The hot melt pressure-sensitive adhesive composition of the present invention advantageously exhibits an average peel strength higher than or equal to 10 N/25 mm with an adhesive coating weight of 20 g/m² on stainless.

The hot melt pressure-sensitive adhesive composition of the present invention advantageously exhibits an average peel strength higher than or equal to 5 N/25 mm with an adhesive coating weight of 20 g/m² on cardboard.

The average peel strength is measured according to the method entitled "Peel test" described below.

The hot melt pressure-sensitive adhesive composition of the present invention advantageously exhibits a loop tack higher than or equal to 15 N/25mm with an adhesive coating weight of 20 g/m² on glass.

The loop tack is measured according to the method entitled "Loop tack test" described below.

The hot melt pressure-sensitive adhesive composition of the present invention advantageously exhibits a static shear at 23°C higher than 1 000 minutes with an adhesive coating weight of 20 g/m².

The static shear is measured according to the method entitled "shear at 23°C" described below.

The hot melt pressure sensitive adhesive composition advantageously resists well to shear stress (such as for example closing of cardboard..).

The hot melt pressure-sensitive adhesive composition advantageously exhibits good adhesive properties while being more environment-friendly.

The hot melt pressure-sensitive adhesive of the invention advantageously has good adhesive properties on different substrate such as on stainless or paper.

The hot melt pressure-sensitive adhesive composition of the invention advantageously has a high tack at room temperature (23°C).

The hot melt pressure-sensitive adhesive composition of the invention advantageously exhibit a good compromise between good adhesive properties, good shear and being at least partially derived from natural resources.

The hot melt pressure-sensitive adhesive is particularly well suitable for labelling refrigerated and semi-frozen articles (preferably at a temperature ranging from 0°C to 10°C).

The composition of the present invention may be prepared by mixing the ingredients at a temperature from 100 to 200°C until reaching a homogeneous mixture.

### Uses

The invention also relates to the use of the hot melt pressure-sensitive adhesive composition as described above, for bonding two substrates.

The present invention also concerns a multilayer system comprising:
- an adhesive layer (A) consisting of the HMPSA composition as disclosed herein;
- a support layer (B) adjacent to the adhesive layer (A); and
- a nonstick protective layer (C), adjacent to the adhesive layer (A).

### Adhesive layer (A):

The thickness of the adhesive layer (A) is preferably strictly greater than 10 µm, more preferably within a range of from 11 to 100 µm, more preferentially from 12 to 35 µm.

### Support layer (B):

The support layer (B) included in the multilayer system according to the invention is adjacent to the adhesive layer (A).

Layer (B) preferably consists of paper or of a film comprising one or more homogeneous layers of a polymer.

Among the suitable polymers, mention may be made of polyolefins, such as polyethylene, including high-density polyethylene, low-density polyethylene, linear low-density polyethylene and linear ultra-low-density polyethylene; polypropylene and polybutylenes; polystyrene; natural or synthetic rubber; vinyl copolymers, such as polyvinyl chloride, which may or may not be plasticized, and poly(vinyl acetate); olefinic copolymers, such as ethylene/methacrylate copolymers, ethylene/vinyl acetate copolymers, acrylonitrile/butadiene/styrene copolymers, and ethylene/propylene copolymers; acrylic polymers and copolymers; polyurethanes; polyethers; polyesters; and mixtures thereof.

Preferably, the support layer (B) is based on acrylic polymers, on polyethylene (PE), polypropylene (PP), which is oriented, non-oriented or biaxially oriented, polyimide, polyurethane, or polyester, such as polyethylene terephthalate (PET).

The support layer (B) may be a printable support layer.

### Nonstick protective layer (C):

The protective nonstick layer (C) can be easily removed without modifying the layer (A), which remains attached to the support layer (B).

According to a preferred embodiment, said layer (C) comprises a silicone-based material, said material either constituting said layer (C), or being present in the form of a surface coating of said layer (C), said coating being intended to be in contact with the adhesive layer (A).

According to a preferred embodiment of the multilayer system according to the invention, said system is packaged in the form of a winding around a reel (or roll), the dimensions of which can vary within a wide range. Thus, the diameter of such a roll may range from 0.25 to 1 m, and its width from 0.25 to 2 m.

According to this preferred embodiment, the protective nonstick layer (C) consists of the support layer (B) included in the multilayer system, wherein the face which is opposite the face in contact with the adhesive layer (A) is coated with a silicone-based material. Such a multilayer system in which the protective nonstick layer (C) is not distinct from the layer (B) is sometimes denoted by the name "linerless". Said packaging is particularly advantageous, because of its simplicity and the resulting economy, for converters who convert these roll stocks into final self-adhesive articles, such as labels or self-adhesive tapes.

The HMPSA composition is in particular applied in the melt state at a temperature above 130°C on the support layer (B) in an amount which is strictly greater than 10 g/m² and which generally ranges from 11 to 100 g/m², preferably from 11 to 35 g/m², to form the adhesive layer (A).

The application is carried out by known coating techniques such as for example lipped-nozzle coating (at a temperature of around 160°C to 180°C) or curtain coating (at a temperature of around 120°C to 180°C). The HMPSA is generally applied by a lipped nozzle onto the nonstick protective layer (C), the assembly then being laminated to the support layer (B) (transfer coating). The application of the HMPSA by curtain coating may be carried out directly on the support layer (B), depending on the coating temperature.

The present invention also relates to the use of the multilayer system as defined above for the manufacture of self-adhesive articles, such as self-adhesive labels and adhesive tapes.

Another subject of the invention is a self-adhesive label capable of being obtained by conversion of the multilayer system described above. In this case, a printable support layer (B) is preferred.

The conversion process carried out generally includes:
- a step of printing onto the printable support layer (B), then
- a step of cutting the multilayer system so as to reduce the width thereof, and therefore to repackage it on a reel of smaller width; then
- a step (termed "stripping") of obtaining a multilayer system, packaged on the reel of the preceding step, wherein the unchanged nonstick protective layer (C) is bonded just to the part of the printed support layer that corresponds to the shape and dimensions of the self-adhesive label designed for its final use. This step therefore consists in selectively cutting it and then removing the undesirable part of the printable support layer (B) and of the adhesive layer (A), said part often being termed the "backbone of the label".

The latter multilayer system is employed on lines for packaging articles to be labeled, such as, for example, packages, by means of automated systems which separate the self-adhesive labels from the protective layer, and attach them to the articles to be labeled. The labeled article is preferably a package or container consisting of:
- glass;
- a usual plastic material chosen from polyethylene terephthalate (PET), polyvinyl chloride (PVC), polyethylene (PE), in particular high-density polyethylene (HDPE), or else polypropylene (PP); or
- cardboard, such as for example the cardboard known under the name FIPAGO cardboard (name originating from the Fédération Internationale des fabricants de PApiers GOmmés (International Federation of the Manufacturers of Gummed Papers), of Kraftliner grade and weight per unit area 200 g/m².

The preferred embodiments for each ingredient can be combined with each other, and also with preferred embodiments relative to the hot melt pressure sensitive adhesive as such, and its uses, without needed to detail all possible combinations.

The ranges disclosed in this description include both the lower and the upper limit thereof. For example, the expressions "ranging from x to y" or "between x and y" comprises the limits x and y.

### Examples

The following examples illustrate the invention without limiting it.

### Material used in the examples

The components used in the examples are described below.
- Europrene^{®} SOL TE9326 from Versalis, a linear SIS (with 30% styrene content, and 15% diblock);
- Kraton^{®} D1118 commercialized by KRATON, is SBS (with 33% styrene content and 78% diblock);
- IRGANOX^{®} 1010 from BASF which is a phenolic type antioxidant;
- DercolyteOM105 from DRT-Pinova: Beta pinene polyterpene resin made from the polymerization of a mix of alpha and beta pinene, having a Ring and Ball softening point ranging of 105°C;
- Sylvalite^{™} RE 100S from Kraton is pentaerythritol rosin ester of tall oil rosin;
- FORAL DX^{®} from DRT is a hydrogenated rosin;
- Oligoester based on castor oil/ricinoleic acid from Vandeputte (O1) (Acid number = 4.72 mg KOH/g, Mn = 2453 g/mol, Mw = 4000 g/mol).

The compositions appearing in table 1 below are prepared by simple hot mixing at 175°C of the ingredients indicated.

The Tg was measured as follows using ARES by Rheometric Scientific: the hot melt pressure-sensitive adhesive composition is placed between two parallel plate. The lower plate connected to the drive applied the strain, the upper plate is static. The geometry radius R is 10 mm. The gap between both plates has a height H of 1,600 µm. The pulsed air oven controls the temperature of the material (+/- 0.5°C).

Test execution:
- After GAP 0 at 130°C,
- placing the adhesive (1 cm³) on the lower plate;
- lowering the upper plate to a gap of 1,800 µm till its contacts the adhesive;
- removing excessive material;
- lowering the upper plate to a gap of 1,600 mm;
- setting the temperature to the start temperature of 130°C, the measurement strain to 20%, the constant oscillation frequency is 10 rad/s and the cooling rate is 5°C/min (from 130°C to 70°C);
- Between 70°C and 20°C, the measurement strain is 10%, the constant oscillation frequency is 10 rad/s and the cooling rate is 5°C/min
- Between 20°C and -20°C, the measurement strain is 1%; the constant oscillation frequency is 10 rad/s and the cooling rate is 5°C/min
- Between -20°C and -40°C, the measurement strain is 0,1%; the constant oscillation frequency is 10 rad/s and the cooling rate is 5°C/min
- after completing the test, melting the adhesive, lifting the upper plate and removing the adhesive from the lower and upper plate; and
- setting the temperature back to room temperature.

The glass transition temperature is then measured by measuring the crossover temperature between storage modulus and loss modulus for temperature higher than 50 °C ; or Tg is measured by measuring the temperature at the maximum of damping factor for temperature lower than 50 °C.

The Brookfield viscosity of these compositions was measured at a temperature of 163°C. The result is indicated in table 2 in mPa.s.

The Brookfield viscosity was measured according to the standard method ASTM D-3236, using a Brookfield viscometer of the type Spindle 27, at a temperature of about 163°C.

These compositions were also tested according to the tests described below.

### Adhesive strength: peel test

The adhesive strength of the compositions is evaluated by the 180° peel test on a plate of a certain substrate, as described in the FINAT test method No. 1, published in the FINAT Technical Handbook, 6th edition, 2001. FINAT is the International Federation of Self-Adhesive Label Manufacturers and Converters.

The principle of this test is as follows: A support layer consisting of a 50 µm thick PET film is precoated with the HMPSA in an amount of 20 g/m².

A test specimen in the form of a rectangular strip (25.4 mm × 175 mm) is cut from the self-adhesive support thus obtained. This test specimen is fastened to a plate consisting of a certain substrate. The assembly obtained is left at 23°C for 20 minutes. It is then introduced into a tensile testing device capable of performing the peeling or detachment of the strip at an angle of 180° and with a separation speed of 300 mm per minute. The device measures the force required to detach the strip under these conditions.

The result is expressed in N/25 mm and is indicated, along with the nature of the substrate of the plate, in table 2.

### Immediate tack: loop tack test

The immediate tack of the compositions is evaluated by the loop tack test described in FINAT test method No. 9.

A support layer consisting of a 50 µm thick PET film is precoated with the HMPSA in an amount of 20 g/m² so as to obtain a rectangular strip of 25.4 mm by 175 mm. The two ends of this strip are joined together so as to form a loop, the adhesive layer of which is facing outward. The two joined ends are placed in the movable jaw of a tensile testing device capable of imposing a rate of displacement of 300 mm/minute along a vertical axis with the possibility of back-and-forth motion. The lower part of the loop placed in the vertical position is first brought into contact with a horizontal plate of a certain substrate of 25 mm by 30 mm over a square area measuring about 25 mm per side. Once this contact has been established, the direction of displacement of the jaw is reversed. The immediate tack is the maximum value of the force required for the loop to become completely detached from the substrate plate.

The result is expressed in N/25 mm and is indicated, along with the nature of the substrate of the plate, in table 2.

### Shear at 23°C

The stability of the adhesive strength of the PET carrier coated with the cured composition is evaluated, no later than one hour after it is obtained, by a test which determines the resistance time of the adhesive joint to static shear at 23° C.

Reference is made, for this test, to the FIN AT method No. 8. The principle is the following. A test specimen in the form of a rectangular strip (25 mm×75 mm) is cut from the PET support layer coated with composition prepared previously. A square portion of 25 mm per side located at the end of the adhesive strip is fastened to a glass plate. The test plate thus obtained is maintained in a vertical position and the strip left free is connected to a weight of 1 kg. Under the effect of this weight, the adhesive joint which ensures the fastening of the strip to the plate is subjected to a shear stress. To better control this stress, the test plate is in fact placed so as to make an angle of 2° relative to the vertical.

The time taken for the strip to debond from the plate following the rupture of the adhesive joint under the effect of this stress is noted. This time is indicated in the table. The corresponding results for a coating weight of 20 g/m² are shown in table 2.

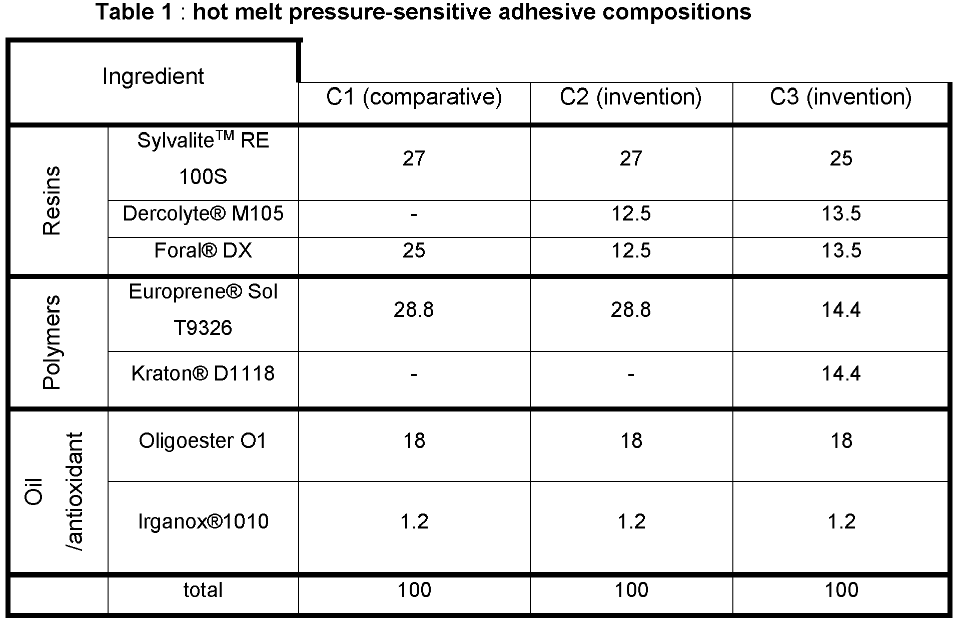

**Table 2 : Results**

| Measurement and tests | | | |
|---|---|---|---|
| | C1 (comparative) | C2 (invention) | C3 (invention) |
| Brookfield Viscosity at 163°C (in mPa.s) | 1850 | 1725 | 2265 |
| Tg (°C) | 0.2 | 4.1 | 0.1 |
| Peel on stainless steel (N/25 mm) | 8.69 | 11.02 | 23.3 |
| Peel on Fipago cardboard (N/25 mm) | 3.27 | 5.07 | 7.94 |
| Loop tack on glass | 15.84 | 17.45 | 33 |
| Shear at 23°C (min) | 2094 | 3052 | 1351 |

The compositions C2 and C3 according to the invention advantageously exhibit a peel strength on stainless higher than 10N/25 mm, and a peel strength higher than 5N/25 mm on Fipago carboard. Besides, both compositions exhibits a loop tack on glass higher than 15 N/25 mm, even more than 25 N/25mm for composition C3.

Comparative composition C1 differs from composition C2 in that it comprises only two tackifiers, whereas composition C2 comprises three tackifiers including a rosin derivative, a rosin ester and a terpene derivative. Comparative composition C1 exhibits poorer peel strength on both stainless and Fipago carboard than composition C2 according to the invention. The same applies for the static shear and the loop tack on glass.

## Claims

1. Hot melt pressure-sensitive adhesive composition comprising:
- a styrene block polymeric component;
- a mixture of tackifying resins, said mixture comprising:
∘ a) a rosin-based resin ;
∘ b) a rosin ester resin different from tackifying resin a);
∘ c) a terpene-based resin.

2. Hot melt pressure-sensitive adhesive composition according to claim 1, **characterized in that** it has a glass transition temperature lower than 5°C, more preferably lower than 2°C.

3. Hot melt pressure-sensitive adhesive composition according to anyone of claim 1 or 2, wherein the styrene block polymeric component has an average styrene content of from 5% by weight to 55% by weight, more preferably from 15% by weight to 45% by weight.

4. Hot melt pressure-sensitive adhesive composition according to anyone of claims 1 to 3, wherein the styrene block copolymer is selected from the group consisting of SB, SI, SEB, SEP, SBBS, SBS, SEBS, SEPS, SEEPS, SIBS, SIS, random-block SBR, random-block SIR and mixtures thereof.

5. Hot melt pressure-sensitive adhesive composition according to anyone of claims 1 to 4, wherein the styrene block polymeric component comprises :
- at least one linear triblock SIS copolymer;
- at least one diblock SI copolymer;
- optionally at least one linear triblock SBS copolymer; and
- optionally at least one diblock SB copolymer.

6. Hot melt pressure-sensitive adhesive composition according to anyone of claims 1 to 5, wherein it comprises from 5 % to 40 % by weight, preferably from 10% to 35 % by weight, even more preferably from 15 % to 35 % by weight of styrene block polymeric component, based on the total weight of the hot melt pressure-sensitive adhesive composition.

7. Hot melt pressure-sensitive adhesive composition according to anyone of claims 1 to 6, wherein the rosin-based resin a) is at least partially hydrogenated, preferably it is fully hydrogenated.

8. Hot melt pressure-sensitive adhesive composition according to anyone of claims 1 to 7, wherein the rosin-based resin a) is not a rosin ester.

9. Hot melt pressure-sensitive adhesive composition according to anyone of claims 1 to 8, wherein the rosin ester b) is selected from the group consisting of glycerol esters of pale wood rosin, glycerol esters of hydrogenated rosin, glycerol esters of polymerized rosin, pentaerythritol esters of pale wood rosin, pentaerythritol esters of hydrogenated rosin, pentaerythritol esters of tall oil rosin and phenolic modified pentaerythritol esters of rosin, their hydrogenated versions, and mixtures thereof, more preferably the rosin ester b) is selected from pentaerythritol rosin ester of tall oil rosin.

10. Hot melt pressure-sensitive adhesive composition according to anyone of claims 1 to 9, wherein the rosin ester b) has a Ring and Ball softening point lower than 110°C.

11. Hot melt pressure-sensitive adhesive composition according to anyone of claims 1 to 10, wherein the terpene-based resin c) is selected from polyterperne homopolymers, their hydrogenated versions, and mixtures thereof.

12. Hot melt pressure-sensitive adhesive composition according to anyone of claims 1 to 11, **characterized in that** it comprises:
- from 8% to 30% by weight of rosin-based resin a);
- from 10% to 40% by weight of rosin ester resin b);
- from 8% to 30% by weight of terpene-based resin c),
based on the total weight of the hot melt pressure-sensitive adhesive composition.

13. Hot melt pressure-sensitive adhesive composition according to anyone of claims 1 to 12, wherein it has a total styrene content higher ranging from 5% to 20%, more preferably ranging from 5% to 15%, and even more preferably ranging from 6% to 11%.

14. Hot melt pressure-sensitive adhesive composition according to anyone of claims 1 to 13, wherein it does not comprise petroleum tackifier.

15. Hot melt pressure-sensitive adhesive composition according to anyone of claims 1 to 14, wherein it comprises a biobased plasticizer.

16. Hot melt pressure-sensitive adhesive composition according to anyone of claims 1 to 15, wherein the biobased plasticizer is selected from the group consisting of animal fat, vegetable oil, their derivatives thereof, lactic acid derivatives, modified versions thereof, fatty acid derivatives, diene homopolymers, and mixtures thereof, more preferably the biobased plasticizer is selected from vegetable oil and their derivatives thereof, and fatty acid derivatives.

17. Hot melt pressure-sensitive adhesive composition according to anyone of claims 1 to 16, wherein the biobased plasticizer has a weight average molecular weight higher than or equal to 2 500 g/mol, more preferably higher than or equal to 3 000 g/mol, and even more preferably ranges from 3 000 g/mol to 12 000 g/mol.

18. Hot melt pressure-sensitive adhesive composition according to anyone of claims 1 to 17, **characterized in that** it has an average peel strength higher than or equal to 10 N/25 mm with an adhesive coating weight of 20 g/m² on stainless, and/or an average peel strength higher than or equal to 5 N/25 mm with an adhesive coating weight of 20 g/m² on cardboard.

19. Hot melt pressure-sensitive adhesive composition according to anyone of claims 1 to 18, **characterized in that** it has a static shear at 23°C higher than 1 000 minutes with an adhesive coating weight of 20 g/m².

20. Multilayer system comprising:
- an adhesive layer (A) consisting of the HMPSA composition as disclosed in anyone of claims 1 to 19;
- a support layer (B) adjacent to the adhesive layer (A); and
- a nonstick protective layer (C), adjacent to the adhesive layer (A).
